# EUROPEAN PATENT APPLICATION

(11) **EP 1 752 385 A1**
(43) Date of publication of application: **14.02.2007**
(21) Application number: 06021201.6
(22) Date of filing: 30.04.2003
(51) Int. Cl.: B65D 65/18

(54) **A wrapped food product**

(62) Divisional of application: 03425265.0
(71) Applicant: SOREMARTEC S.A., 6700 Arlon-Schoppach (BE); Ferrero S.p.A., 12051 Alba (IT); FERRERO OFFENE HANDELSGESELLSCHAFT m.b.H., 60599 Frankfurt am Main (DE)
(72) Inventor: Terrasi, Giuseppe, 12050 Benevello (Cuneo) (IT)
(74) Representative: Rambelli, Paolo

(57) **Abstract**

A wrapped food product comprises a confectionery product (2) wrapped in a wrapper (3) made of sheet material, characterized in that the wrapper (3) made of sheet material comprises at least one transparent portion (12) adjacent a non-transparent portion (13), the transparent portion (12) being wrapped around the body of the confectionery product so as to render a characterizing portion (10, 11) of its surface visible from the exterior.

## Description

The present invention relates to a wrapped food product comprising a confectionery product such as, in particular, a praline, wrapped in a wrapper made of sheet material.

The sheet material most commonly used for wrapping confectionery products such as pralines, chocolates and the like is generally constituted by an aluminium foil. The selection of an aluminium foil as wrapping material is considered preferable because it fits easily around the product so as to produce a wrapper that clings to the body of the product even when surface irregularities are present. When the shape of the confectionery product is perceived by the consumer as identifying and characterizing the product, the ability of the aluminium foil to follow the shape of the product closely helps to achieve a distinctive product result which, naturally, can be further enhanced with the use of specific colorations of the foil, or by applying a characterizing logo to the foil.

For confectionery products and particularly pralines, however, it is often desirable to adopt the solution of providing products which, although they have similar general shape characteristics which identify the producer's line or trade mark, have different organoleptic characteristics such as taste and flavour resulting from the presence of different ingredients. Within the context of this solution, it is desirable for the confectionery product to have on its surface a distinctive characteristic which can readily be related by the consumer to the organoleptic characteristics of the product. Thus, for example, a praline formed by a chocolate or wafer shell including a filling constituted by a fruit-based cream may be provided on its outer surface with a complete coating or, for example, with a coating that is limited to a top portion of the praline and is constituted by a frosting the colour of which identifies the fruit contained in the filling; alternatively, the praline may comprise a further distinctive element in its top region such as, for example, a dried fruit, a berry or a seed or nut of a type corresponding to the flavour and aroma of the filling.

The present invention arises from the fact that conventional aluminium foil wrappers are not suitable for allowing the consumer to perceive the characteristics of the wrapped product.

The invention has therefore been developed with particular attention to the problem of providing a wrapped product the characteristics of which are readily perceptible by the consumer, even within a range comprising a plurality of wrapped products having generally similar shape characteristics.

The invention has also been developed in order to provide a wrapper suitable for enhancing the distinctive aesthetic characteristics of the wrapped confectionery product.

In view of these objects, a subject of the invention is a wrapped food product comprising a confectionery product wrapped in a wrapper made of sheet material, characterized in that the wrapper made of sheet material comprises at least one transparent portion adjacent a non-transparent portion, the transparent portion being wrapped around the body of the confectionery product so as to render a characterizing portion of its surface visible from the exterior.

Further preferred characteristics of the confectionery product are defined in the appended claims.

Specific embodiments of the wrapped product are illustrated in the appended drawings which are provided by way of nonlimiting example, and in which:
Figure 1 is a front elevational view of a wrapped product according to the invention,
Figure 2 is a partially-sectioned front view of an embodiment of the wrapped product,
Figure 3 is an exploded perspective view of a wrapping sheet used in the wrapper.

With reference to the drawings, a wrapped confectionery product, generally indicated 1, comprises a praline 2 and a wrapper 3 made of sheet material. In the embodiment shown, the praline has a body with a substantially flat, for example, circular base surface 4, a cup-shaped lower body portion 5, and a dome-shaped upper portion 6. However, the invention is not intended to be limited to a specific shape of the confectionery product which may, for example, adopt other shapes such as a spherical, substantially conical or frustoconical, pyramidal or frusto-pyramidal, chest or bar shape. Similarly, the term "praline" is intended to include other similar confectionery products such as, for example, chocolates.

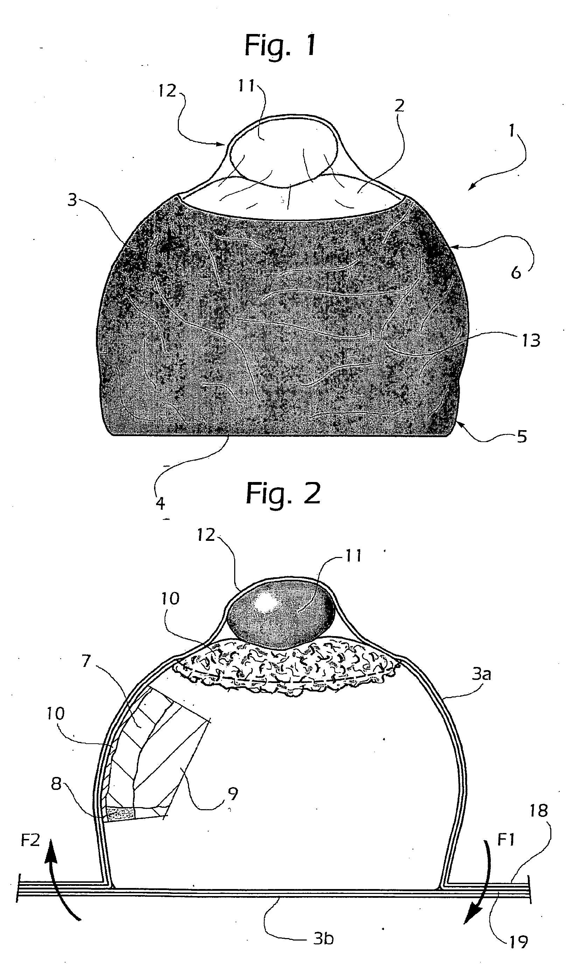

In a preferred embodiment, the product concerned is a praline formed by two half-shells 7, 8 (partially visible in the section of Figure 2) fitted together mouth to mouth and including a filling 9; the outer surface of the praline may have a partial or complete coating. In the preferred embodiment, the praline has, at least in its top region, a surface portion which can be perceived by the consumer as characterizing the organoleptic properties of the product. For example, this may be a coating or frosting 10 the appearance, for example the colour, of which can be associated directly with the taste or aroma of the product. For example, for a praline having a filling 9 constituted by a pistachio-flavoured cream, the outer surface of the praline may have a green-coloured frosting 10, at least in its top region. A further distinctive element 11, preferably also having the function of supplying flavour and constituted, for example, by a seed or nut, a berry, or a natural, dried or reconstituted fruit, is preferably associated with the body of the praline and arranged in an upper position (for example, in a recess) on the praline body. In the above-mentioned example, the distinctive element 11 may be, for example, a seed or nut, a berry or a dried fruit characterizing the flavour of the praline and also having decorative aesthetic characteristics.

The praline is wrapped in a wrapper 3 made of sheet material substantially clinging to the body of the praline and having a transparent portion 12 and a non-transparent portion 13. Preferably, the transparent portion 12 is wrapped around the top portion of the praline so that a top surface portion 10 and the distinctive top element 11, when there is one, are rendered visible from the exterior.

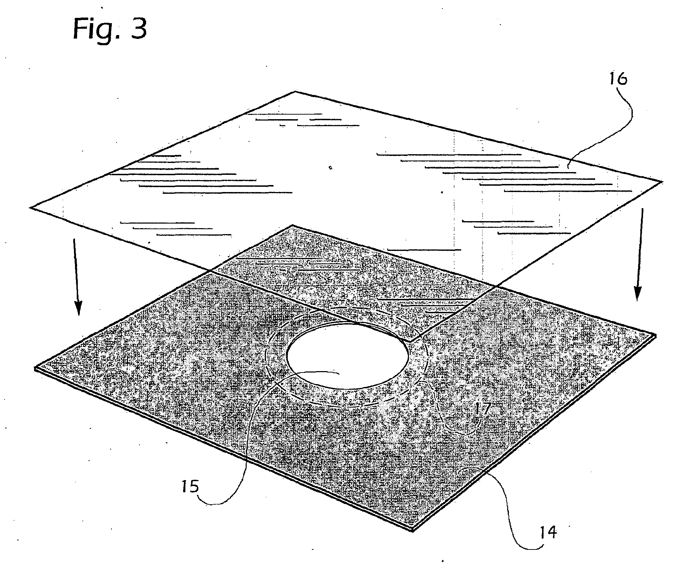

In the preferred embodiment, the wrapper 3 comprises a laminated sheet comprising a metal foil 14, preferably an aluminium foil, provided with a central opening 15 the shape of which may, of course, vary according to requirements, and a transparent film 16 which covers substantially the entire surface of the metal foil including the opening 15, the foil 14 and the film 16 being connected to one another by adhesion, optionally with the interposition of a thermally meltable lacquer in accordance with known techniques for the formation of laminates. Alternatively, the transparent film 16 may be shaped and connected to the metal foil 14 so as to cover the opening 16 and a limited annular region surrounding the opening, for example, the region indicated 17 in Figure 3 and delimited by a broken line in that drawing.

The wrapping sheet may have any suitable peripheral profile, a rectangular or square profile being preferred.

The transparent film may be made of transparent plastics material such as, for example, polyester, polypropylene, or polyamide. The term "transparent" as used in the present description also comprises materials more correctly definable as translucent, that is, materials which allow the observer to perceive visually the distinctive element or characterizing surface portion of the confectionery product.

The wrapping sheet 3 may also be constituted purely by a plastics film having a transparent central portion or window and a non-transparent or opaque peripheral portion resulting from the application of a paint, lacquer or printing ink to that portion.

The package may be produced with the use of a single wrapping sheet which is wrapped around the whole praline body with the end portions of the sheet turned over or fixed in another manner on the base 4 of the praline, for example, with an additional adhesive element.

However, in the preferred embodiment, the wrapper 3 is formed by two wrapping sheets 3a and 3b which together cover the entire praline body. In this solution, which is shown in Figure 2, the sheet 3a having the central transparent region 12 covers the side wall of the praline and the sheet 3b covers the base 4 of the praline and the sheets 3a, 3b are connected to one another in respective annular peripheral regions 18 and 19; the connection between the peripheral regions 18 and 19 of the two sheets may be rendered permanent by sealing, thus producing a hermetic or substantially hermetic wrapper.

In this embodiment, the sheets 3a and 3b are preferably laminated sheets of the type described above. If the transparent plastics film forming the laminate is heat-sealable, the two sheets 3a and 3b are arranged in position wrapped around the food product with the surfaces of plastics material facing inwards and the connection in the peripheral regions 18 and 19 can be performed by heat-sealing.

It is, however, preferable to arrange the two sheets 3a and 3b with the metal (aluminium) foil facing inwards, and to perform the sealing of the peripheral regions 18 and 19 by gluing with the application of material or by heat-sealing performed by bringing about fusion (by the direct supply of heat or by applications of ultrasound waves) of a thermally meltable coating (a lacquer) provided on the metal foil.

Methods and devices suitable for producing a hermetic wrapper of the type shown in Figure 2 are described in EP-A-0 591 742 and EP-A-1 046 579.

As described in the above-mentioned documents, the peripheral regions 18 and 19 which are sealed against one another may be folded onto the base 4 of the praline body (in accordance with the arrow indicated F1) or may be turned towards the top portion of the praline body (in accordance with the arrow indicated F2) so as to form a cup-shaped or beaker-shaped body in which the peripheral edge surrounds the praline body at a distance, as described in EP-A-1 046 579.

The invention thus provides a wrapper for a food product which enhances the aesthetic and decorative characteristics of the product and which is attractive to the consumer, also enabling the consumer to make a choice between a plurality of products having generally similar shape characteristics.

The laminated wrapping sheet comprising an aluminium foil and a transparent film, which constitutes a preferred selection within the scope of the invention, has the desired characteristics that it fits around the product and is easy to shape, combined with a substantially plastic behaviour so that the facility to cause the wrapping sheet to cling closely to the product is not impaired even if the product is of complex shape, and even when it is desirable to highlight the surface irregularities of the product by means of a corresponding irregularity of the surface of the wrapping sheet.

It is intended that the dimensions of the transparent portion of the wrapper may be reduced to the minimum necessary to achieve the desired effect of rendering visible and enhancing the characteristics of the confectionery product whilst retaining the desirable function typical of conventional aluminium wrappers of protecting the body of the product from light.

Naturally, the principle of the invention remaining the same, the details of construction and the forms of embodiment may be varied widely with respect to those described and illustrated, without thereby departing from the scope of the present invention as defined by the appended claims.

## Claims

1. A wrapped food product comprising a confectionery product (2) wrapped in a wrapper (3) made of sheet material, wherein the wrapper (3) comprises one sheet of said material comprising at least one transparent portion (12) adjacent a non-transparent portion (13), **characterised in that** the confectionery product (2) comprises a praline (2) including an added distinctive element (10, 11) positioned in the top region of the praline, the transparent portion (12) being wrapped around the body of the confectionary product so as to render said distinctive element (10, 11) visible from the exterior.

2. A wrapped food product according to Claim 1, **characterised in that** the confectionary product is a praline (2) including a filling (9) and in which the distinctive element (11) is a seed or nut, a berry, or a fruit of a type corresponding to the flavour of the filling.

3. A wrapped food product according to Claims 1 or 2, **characterised in that** the confectionary product (2) is a praline having, at least in its top region, a coating (10) which is at least partially visible through the transparent wrapper portion (12) and the appearance of which is perceived as characterising the flavour of the praline.

4. A wrapped food product according to Claim 1, **characterised in that** wrapper (3) comprises at least one laminated sheet comprising a metal foil (14) provided with an opening (15) and combined with a transparent film (16) which covers the opening (15) and at least an annular region (17) of the metal foil surrounding the opening.

5. A wrapped food product according to Claim 1, **characterised in that** the wrapper (3) comprises at least one laminated sheet comprising a metal foil (14) having an opening (15) and combined with a transparent film which covers substantially the entire surface of the metal foil (14) including the opening (15).

6. A wrapped food product according to Claim 1, **characterised in that** the wrapper (3) made of sheet material comprises a plastics film having a transparent central portion and a non-transparent peripheral portion.

7. A wrapped confectionery product according to Claim 6, **characterised in that** the non-transparent peripheral portion comprises a coating applied to the plastics film.

8. A wrapped confectionery product according to any one of Claims 1 to 7, **characterised in that** the non-transparent peripheral portion (13) is wrapped around the side walls and base of the body of the confectionery product and the transparent portion (12) is wrapped around the top region (11, 10) of the confectionery product.

9. A wrapped food product according to any one of Claims 1 to 8, **characterised in that** the wrapper made of sheet material is formed by a single sheet which is wrapped around substantially the entire body of the confectionary product.

10. A wrapped confectionery product according to Claim 1, **characterised in that** the wrapper (3) made of sheet material comprises a first sheet (3a) and a second sheet (3b) connected to one another in respective peripheral regions (18, 19) that are sealed together.

11. A wrapped food product according to Claim 10, **characterised in that** each of the first and second sheets (3a, 3b) is constituted by a laminate comprising a metal foil (14) combined with a transparent plastics film (16), the first and second sheets (3a, 3b) being arranged in position for wrapping the product with the metal foil facing towards the product, and the respective peripheral regions (18, 19) being sealed together by means of a thermally meltable glue or lacquer deposited on the metal surface.
